# EUROPEAN PATENT APPLICATION

(11) **EP 4 484 274 A1**
(43) Date of publication of application: **01.01.2025**
(21) Application number: 23766133.5
(22) Date of filing: 10.03.2023
(51) Int. Cl.: B63H 21/21

(54) **VEHICLE, MULTI-DRIVE FORCE CONTROL SYSTEM THEREOF, CONTROL METHOD, AND STORAGE MEDIUM**

(30) Priority: 10.03.2022 CN 202210240170
(71) Applicant: Guangdong ePropulsion Technology Limited, Dongguan, 523808 Guangdong Province (CN)
(72) Inventor: CHEN, Guanfu, Dongguan, Guangdong 523808 (CN); LIU, Zhanghua, Dongguan, Guangdong 523808 (CN); WAN, Xiaokang, Dongguan, Guangdong 523808 (CN); TAO, Shizheng, Dongguan, Guangdong 523808 (CN)
(74) Representative: Michalski Hüttermann & Partner Patentanwälte mbB
(86) International application number: PCT/CN2023/080745
(87) International publication number: WO 2023/169556

(57) **Abstract**

The present disclosure relates to the technical field of vehicle multi-power-source control, and provides a vehicle, a multi-power-source control system of the vehicle, a control method of the vehicle and a storage medium. The system comprises: a first power control device configured with one or more power management components, each for generating a corresponding power control signal; a plurality of control units, one of the plurality of control units being connected to the first power control device, the connection among the plurality of control units being configurable to enable a plurality of driving devices to work cooperatively or independently, and each of the plurality of control units being configured to analyze a corresponding power control signal; a plurality of power controllers being correspondingly connected with the plurality of control units and used for outputting drive signals to the corresponding power devices according to the power control signals analyzed by the corresponding control units. Embodiments of the present disclosure can reduce the costs of a control system in a multi-power-source vehicle, such as a marine vessel and the like, and have the characteristics of flexible operation and strong scalability.

## Description

### CROSS-REFERENCE TO RELATED APPLICATION

This application is a continuation of International Application No. PCT/CN2023/080745, filed on March 10, 2023, which claims priority to Chinese Patent Application No. 202210240170.1, filed on March 10, 2022. The entire contents of each of the above-referenced applications are expressly incorporated herein by reference.

### TECHNICAL FIELD

The present disclosure relates generally to the technical field of controlling multi-power-source vehicles, and in particular, to multi-power-source vehicle, multi-power-source vehicle control system, vehicle control method, and related storage medium.

### TECHNICAL BACKGROUND

It's challenging to control a vehicle such as a marine vessel that is equipped with one or more multiple power source units. For example, taking an existing marine vessel with dual-engine control system as an example, a dual-throttle lever is generally used to connect with the control units of the two standard power device components respectively. The wiring required by this scheme is complex. In addition to the need to connect the control units with the dual-throttle lever, it is also necessary to separately connect the control units with the signal lines, which makes the costs of the power control equipment higher. Therefore, how to reduce the costs of the control system in a multi-power-source vehicle such as a marine vessel has become an urgent technical problem to be solved.

### SUMMARY

The purpose of the embodiments in the present disclosure is to provide a vehicle, a multi-power-source control system of the vehicle, a control method of the vehicle and related storage medium, for reducing the costs of a multi-power-source control system used in a vehicle such as a marine vessel.

To achieve the above objective, in one aspect, some embodiments of the present disclosure provide a vehicle multi-power-source control system, comprising:
a first power control device configured with one or more power management components, each for generating a corresponding power control signal;
a plurality of control units, one of the plurality of control units being connected to the first power control device, the connection among the plurality of control units being configurable to enable a plurality of power devices to work cooperatively or independently, and each of the plurality of control units being configured to analyze a corresponding power control signal;
a plurality of power controllers are correspondingly connected with the plurality of control units and configured for outputting drive signals to the corresponding power devices according to the power control signals analyzed by the corresponding control units.

In the vehicle multi-power-source control system of an embodiment of the present disclosure, each control unit is further configured to:
broadcast an identification code to another control unit in the plurality of control units when the system is powered on, and determine whether the identification code broadcasted by the other control unit is received or not;
confirm that it is in a cooperative working mode when receiving the identification code broadcasted by the other control unit, otherwise, confirm that it is in an independent working mode.

In the vehicle multi-power-source control system of an embodiment of the present disclosure, each control unit is further configured to:
set itself to a slave mode when confirming that it is in the cooperative working mode, and determine whether a message of switching to a master mode is received;
switch itself to a master mode when receiving the message of switching to the master mode, otherwise, remain in the slave mode.

In the vehicle multi-power-source control system of an embodiment of the present disclosure, each control unit is further configured to:
set itself to the slave mode when confirming that it is in the cooperative working mode, and determine whether its own identification code is a target identification code; and
switch itself to the master mode when its own identification code is the target identification code, otherwise, remain in the slave mode.

In the vehicle multi-power-source control system of an embodiment of the present disclosure, the target identification code is the minimum or the maximum of a plurality of identification codes.

In the vehicle multi-power-source control system of an embodiment of the present disclosure, the vehicle multi-power-source control system further comprises:
one or more second power control devices with a single power management component, wherein the second power control devices are in one-to-one correspondence with the power devices; the second power control devices are configured to generate power control signals corresponding to the power devices; and a control priority of the second power control devices is higher than a control priority of the first power control device.

In the vehicle multi-power-source control system of an embodiment of the present disclosure, each control unit is further configured to:
confirm whether a same identification code exists in the system before determine whether its own identification code is the target identification code; and
when the same identification code exists, perform an identification code update so that the identification code of each control unit is different.

In the vehicle multi-power-source control system of an embodiment of the present disclosure, the cooperative working mode comprises any one of the following:
the master is controlled by a power management component, and all slaves are controlled by another power management component;
the master is controlled by a power management component, and some of the slaves are controlled by another power management component;
the plurality of control units are controlled by a same power management component; or
the plurality of control units are divided into several groups, and each group is controlled by a power management component.

In the vehicle multi-power-source control system of an embodiment of the present disclosure, the vehicle multi-power-source control system further comprises a display unit;
the control unit that switches to the master mode is configured to:
send data information of the master and the slaves to the display unit for display in real time.

In the vehicle multi-power-source control system of an embodiment of the present disclosure, one of the plurality of control units is connected with the first power control device through a first communication bus, and the plurality of control units are connected with each other through a second communication bus.

In another aspect, some embodiments of the present disclosure provide a vehicle multi-power-source control method, which is applied to the vehicle multi-power-source control system described above, and the method comprises:
generating by the first power control device a corresponding power control signal;
analyzing by the control unit the power control signal;
outputting by the power controller a drive signal to a corresponding power device according to the analyzed power control signal.

In the vehicle multi-power-source control method of some embodiments of the present disclosure, the method further comprises:
broadcasting, by each control unit in the plurality of control units, an identification code when the system is powered on, and determining whether an identification code broadcasted by any other control unit is received or not;
confirming that it is in a cooperative working mode when receiving one identification codes broadcasted by any other control unit, otherwise, confirming that it is in an independent working mode.

In the vehicle multi-power-source control method of some embodiments of the present disclosure, after a control unit confirms that it is in the cooperative working mode, the method further comprises:
setting the control unit to a slave mode and determining whether a message of switching to a master mode is received;
switching the control unit to a master mode when the control unit has received the message of switching to the master mode, otherwise, remaining in its own slave mode.

In the vehicle multi-power-source control method of some embodiments of the present disclosure, after a control unit confirms that it is in the cooperative working mode, the method further comprises:
setting the control unit to a slave mode and determining whether its own identification code is a target identification code;
switching the control unit to the master mode when its own identification code is the target identification code, otherwise, remaining its own slave mode.

In the vehicle multi-power-source control method of some embodiments of the present disclosure, the target identification code is the minimum or the maximum of a plurality of identification codes.

In the vehicle multi-power-source control method of some embodiments of the present disclosure, the vehicle multi-power-source control system further comprises one or more second power control devices with a single power management component; the second power control devices are in one-to-one correspondence with the power devices; correspondingly, the vehicle multi-power-source control method further comprises:
when the first power control device fails, controlling the corresponding power device according to the power control signal outputted by the second power control device; or
when the power control signal respectively outputted by the first power control device and the second power control device for the same power device are simultaneously received, responding to only the power control signal outputted by the second power control device is responded to.

In the vehicle multi-power-source control method of some embodiments of the present disclosure, before a control unit determines whether its own identification code is the target identification code, the method further comprises:
checking by the control unit whether the same identification code exists in the system; and
when the same identification code exists, updating its own identification code by the control unit so that the identification code of each control unit is different.

In the vehicle multi-power-source control method of some embodiments of the present disclosure, the cooperative working mode comprises any one of the following:
the master is controlled by one power management component, and all slaves are controlled by another power management component;
the master is controlled by a power management component, and some of the slaves are controlled by another power management component;
all control units are controlled by one power management component; or
all control units are divided into several groups, and each group is controlled by a power management component.

In the vehicle multi-power-source control method of an embodiment of the present disclosure, the vehicle multi-power-source control system further comprises a display unit;
the control unit that switches itself to the master mode is also configured to:
send the data information of the master and the slaves to the display unit for display in real time.

In the vehicle multi-power-source control method of an embodiment of the present disclosure, one of the plurality of control units is connected with the first power control device through a first communication bus, and the plurality of control units are connected with each other through a second communication bus.

In another aspect, some embodiments of the present disclosure further provide a vehicle configured with the vehicle multi-power-source control system described above.

In another aspect, some embodiments of the present disclosure further provide a computer storage medium having a computer program stored thereon. The computer program, when executed by a processor of the vehicle, implements processes of the vehicle multi-power-source control method described above.

As can be seen from the above technical solutions provided by the embodiments of the present disclosure, in the embodiments of the present disclosure, the power control device only needs to be connected with one control unit, instead of being respectively connected with each control unit as in the related art, thereby simplifying the wiring connection, streamlining the connection interfaces, and reducing the multi-power-source control system costs of the vehicle. In addition, the connection among the plurality of control units in embodiments of the present disclosure can be configured, and the user can choose the independent working mode of a single power device or the cooperative working mode of a plurality of power devices simply by controlling one or more power management components of a same power control device. When the power management components are bidirectional management components, it can also realize the control of different directions of a single power device or a plurality of power devices, which is convenient for users to control the power devices according to their needs, and has the advantages of flexible operation and strong scalability.

### BRIEF DESCRIPTION OF DRAWINGS

In order to more clearly illustrate the technical solutions of the embodiments of the disclosure or the related art, the following will briefly introduce the drawings required in the description of the embodiments or the related art. Obviously, the drawings described below only illustrate some embodiments described in the disclosure, and ordinary skilled technicians in this field can derive other drawings based on these drawings without inventive labor. In the drawings:
Fig. 1 illustrates a block diagram of the composition structure of a vehicle multi-power-source control system according to some embodiments of the present disclosure;
Fig. 2 illustrates a block diagram of the composition structure of a vehicle multi-power-source control system according to other embodiments of the present disclosure;
Fig. 3 illustrates a schematic diagram of a power control device of a vehicle multi-power-source control system according to some embodiments of that present disclosure;
Fig. 4 illustrates a block diagram of the composition structure of the power system standards according to some embodiments of the present disclosure;
Fig. 5 illustrates a schematic diagram of the connection of a plurality of power system standards according to some embodiments of the present disclosure;
Fig. 6 illustrates a flow chart of a vehicle multi-power-source control method according to some embodiments of the present disclosure;
Fig. 7 illustrates a flow chart of a vehicle multi-power-source control method according to some embodiments of the present disclosure;
Fig. 8 illustrates a flow chart of a vehicle multi-power-source control method according to some embodiments of the present disclosure;
Fig. 9 illustrates a block diagram of a computer device according to some embodiments of the present disclosure.

Description of reference marks in the drawings:
10-Power device; 10a-Left propeller; 10b-Right propeller; 20-Power controller; 20'-MCU (microcontroller); 20a-Left motor controller; 20B-Right motor controller; 30-Control unit; 30'-RTU (remote terminal unit); 30'a-RTU master; 30'b-RTU slave; 30a-Left control unit; 30B-Right control unit; 40-Power control device; 40'-Dual throttle levers; 40a-Left throttle lever; 40b-Right throttle lever; 50-Display unit; 60-Power management module; 902-Computer device; 904-Processor; 906-Memory; 908-Drive mechanism; 910-Input/Output interface 912-Input device; 914-Output device; 916-Presentation device; 918-Graphical user interface; 920-Network interface; 922-Communication link; 924-Communication bus.

### DETAILED DESCRIPTION

In order for ordinary skilled technicians in this field to better understand the technical solutions in the present disclosure, the technical solutions in embodiments of the present disclosure will be clearly and completely described below in conjunction with the drawings in the embodiments of the present disclosure. Obviously, the described embodiments are only a part of the embodiments of the present disclosure, not all of the possible embodiments. Based on the embodiments disclosed in the present disclosure, all other embodiments obtained by ordinary skilled technicians without inventive work shall fall within the scope of protection of the present disclosure.

The vehicle multi-power-source control system, the vehicle multi-power-source control method, and the like according to the embodiments of the present disclosure can be applied to a vehicle, such as a marine vessel, equipped with a plurality of power devices. A power device may include, but is not limited to, an electric propulsion device, a diesel engine, a gas turbine, or a combined/hybrid power device and the like. Therefore, in the following embodiments, the exemplary description taking an electric propulsion marine as an example is only for illustration, and should not be understood as a limitation to the embodiments of the present disclosure. In other embodiments of the present disclosure, the marine vessel may also be a marine vessel based on other types of power devices, and the vehicle may also be an aircraft, an automobile, etc.

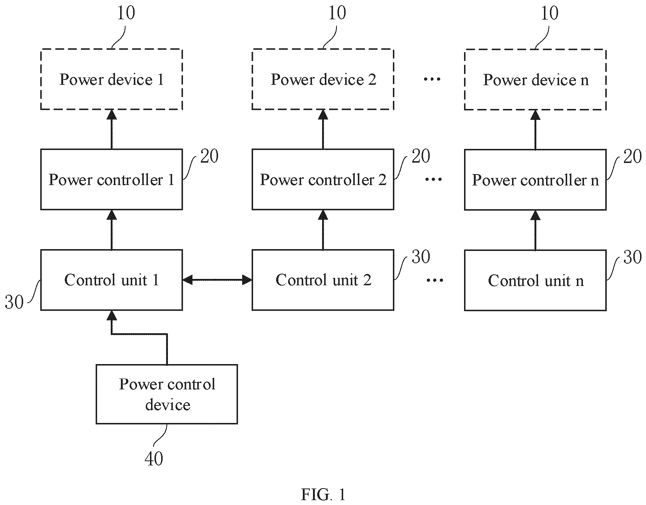

In referring to Fig. 1, a marine multi-power-source control system according to an embodiment of the present disclosure is used to control a plurality of power devices 10 of a marine vessel. The marine multi-power-source control system may include a plurality of power controllers 20, a plurality of control units 30, and a power control device 40. The power control device 40 is configured with one or more power management components, and a power management component is used for generating a corresponding power control signal (e.g., to generate a corresponding power control signal based on a user operation). One of the plurality of control units 30 is connected to the power control device 40. The connection among the plurality of control units 30 are configurable to enable the plurality of power devices 10 to work cooperatively or independently, and each control unit 30 is configured to analyze a corresponding power control signal. The plurality of power controllers 20 are correspondingly connected to the plurality of control units 30, and are configured to output a driving signal to the corresponding power device 10 according to the power control signal analyzed by the corresponding control unit 30, so as to adjust the power (e.g., power or torque) of the corresponding power device 10.

In referring to Fig. 1, according to the marine multi-power-source control system in an embodiment of the present disclosure, the power control device 40 only needs to be connected with one control unit 30, and the power control device 40 does not need to be respectively connected with each control unit 30 as in the related art, thereby simplifying the wiring connection, reducing the connection interfaces, and reducing the multi-power-source control cost of the vehicle. In addition, the connection among the plurality of control units in the embodiments of the present disclosure can be configured, and the user can control the independent work of a single power device or the cooperative work of a plurality of power devices by controlling only one or more power management components of the same power control device. When the power management components are bidirectional management components, it can also realize the control of different directions of a single power device or a plurality of power devices, which is convenient for users to control the power devices according to the demand, and allow flexible operations and strong scalability.

The connection configuration described above means that two or more control units are selectively connected as required to allow data interaction between them. For example, in some embodiments, the system has four control units, and the four control units correspond to four power devices. If only two of the power devices are required to participate in driving the marine vessel, the control units corresponding to the two participating power devices can be selected for connection. If all four power units are required to participate in the driving of the marine vessel, the control units corresponding to all the power units can be connected.

Referring to Fig. 1, the power device 10 is an actuator for driving the vessel to move. In some embodiments, the plurality of power devices 10 may be the same power device (e.g., a plurality of electric propulsion devices with same specification), or may be different power devices (e.g., a combined power device comprising a plurality of different power devices 10). For example, in some embodiments, the power device 10 may include a motor and a propeller connected to the motor via a transmission mechanism. The motor may be a DC motor, an asynchronous motor or a synchronous motor, etc.

In referring to Fig. 1, the power controller 20 is a control unit that directly controls the power device 10, and the power controller 20 is controlled by the control unit 30. For example, if the power device 10 of the marine vessel is an electric propulsion device, the power controller 20 may be a motor controller or a motor driver. In the electric propulsion device, the motor controller can convert the electric energy stored in the power battery into electric energy required for driving the motor according to the throttle or the like, and can control the motor to operate according to a set direction, speed, angle and response time. In one exemplary embodiment, the power controller 20 may be a microcontroller (MCU) such as a single chip microcomputer. The motor driver is an actuator that converts electrical pulses into angular displacement, where the electrical pulses are parsed power control signals (e.g., PWM signals, etc.) output by the control unit 30 expressed in the form of pulses.

In referring to Fig. 1, the control unit 30 is an upper computer of the power controller 20, and can parse the power control signal generated by the power control device 40 into a control signal that can be transmitted on a communication medium (e.g., CAN-bus) and can be recognized by the power controller 20, so that the power controller 20 can control the operation of the power device 10 accordingly. Of course, the control unit 30 may also be used to perform other monitoring and control functions as required. In some embodiments, the control unit 30 may be a Remote Terminal Unit (RTU) or the like. Compared with the commonly used control units such as programmable logic controller (PLC), RTU has more powerful computing functions, communication capabilities and storage capacities, and is suitable for use in bad temperature and humidity environments, therefore it is more suitable for marine application scenarios.

In referring to Fig. 1, the power control device 40 is an operable device (a component that can be directly operated by a user) that controls the power (thrust) of the power device 10 of the marine vessel. As required, the power control device 40 may be provided with a single power management component or a plurality of power management components, and the power management component may be a unidirectional power management component or a bidirectional power management component. The unidirectional power management component can only control the power regulation in a single direction (e.g., forward direction), while the bidirectional power management component can not only control the power regulation in the forward direction, but also realize the power regulation in the backward direction (i.e., implement the reverse propulsion power control). In some embodiments, the power control device 40 may be a throttle lever, an accelerator pedal, etc. In some embodiments of the present disclosure, for the sake of differentiation, the power control device 40 configured with a plurality of power management components may be referred to as a first power control device, and the power control device 40 configured with a single power management component may be referred to as a second power control device.

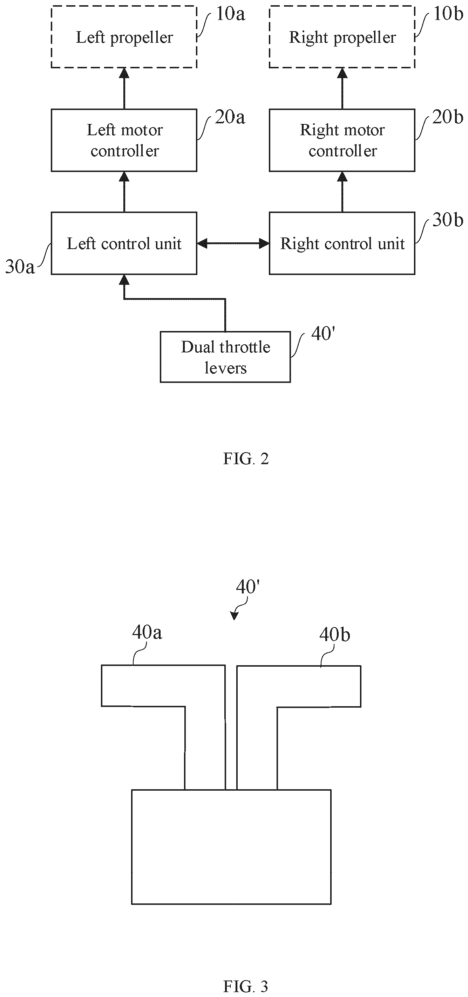

In referring to Fig. 2, in some embodiments, taking a marine vessel equipped with a dual power device as an example, the power devices may comprise a left propeller 10a and a right propeller 10b. The power controller may comprise a left motor controller 20a and a right motor controller 20b, and the control unit may comprise a left control unit 30a and a right control unit 30b. The power control device 40 may be a dual throttle levers 40' and connected to the left control unit 30a (or alternatively to the right control unit 30b in other embodiments).

As shown in conjunction with Fig. 3, the dual throttle levers 40' may be provided with a left throttle lever 40a and a right throttle lever 40b. The double throttle lever 40' can correspondingly output a left throttle signal and a right throttle signal (the left throttle signal and the right throttle signal are power control signals for controlling the power of the motor) according to the operation of the user. When the user pushes the left throttle lever 40a forward or backward, the left propeller 10a will push the marine vessel forward or backward. When the user pushes the right throttle lever 40b forward or backward, the right propeller 10b pushes the marine vessel forward or backward. When the user pushes the left throttle lever 40a and the right throttle lever 40b forward or backward simultaneously, the left propeller 10a and the right propeller 10b also push the boat forward or backward simultaneously. When the user pushes the left throttle lever 40a forward and pushes the right throttle lever 40b backward simultaneously, the marine vessel can be turned to the right, and similarly, when the user pushes the left throttle lever 40a backward and pushes the right throttle lever 40b forward simultaneously, the marine vessel can be turned to the left.

In referring to Fig. 1, when the user operates the power control device 40, the power control device 40 generates a power control signal, and the power control signal may be provided to the corresponding control unit 30 for processing. For example, as shown in conjunction with Figs. 2 and 3, the left throttle signal generated by the user's management of the left throttle lever 40a may be provided to the left control unit 30a for processing. Specifically, the left control unit 30a may analyzes the left throttle signal, and sends the analyzed left throttle signal to the left motor controller 20a after the analysis is completed, so that the left motor controller 20a can control the operation of the left propeller 10a according to the analyzed left throttle signal. In the case where the left control unit 30a and the right control unit 30b are configured to be connected (e.g., via a communication bus or the like), if the right throttle lever 40b is operated by the user to generate a right throttle signal, the left control unit 30a sends the right throttle signal to the right control unit 30b for analyzing by the right control unit 30b, and after the analysis is completed, the analyzed right throttle signal is sent to the right motor controller 20b, so that the right motor controller 20b can control the operation of the right propeller 10b according to the analyzed right throttle signal.

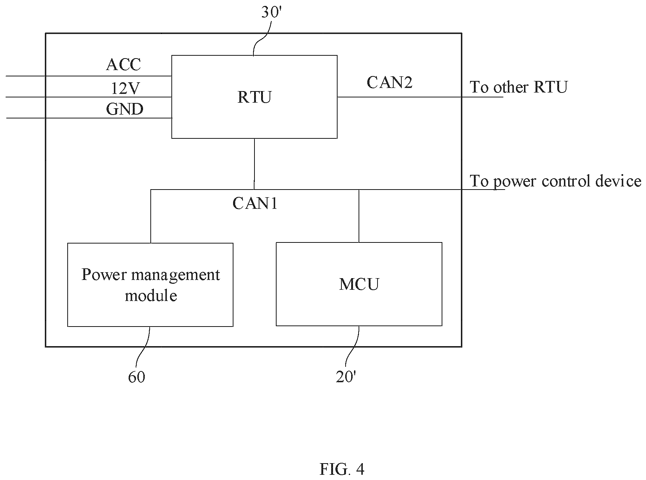

In some embodiments, in order to facilitate installation and maintenance, and to facilitate subsequent expansion and control, the control unit, the motor controller, the power management module, and/or the power device of the marine may be modularly integrated. For example, in some embodiments, a single control unit, a single motor controller, a single power management module, and a single power device (comprising a single motor and a single propeller) of the marine vessel may be integrated together to form one power device standard member. When the marine is provided with a plurality of control units, a plurality of motor controllers, a plurality of power management modules and a plurality of power devices, a plurality of power device standard members can be formed correspondingly. Of course, the power device standard member described above is only for illustrative purposes, and in other embodiments, one or more components may be appropriately added, reduced, or replaced in the power device standard member as required. For example, in the embodiment shown in Fig. 4, one of the power device standard members may comprise a control unit (e.g., RTU 30' in Fig. 4), a motor controller (e.g., MCU 20' in Fig. 4), a motor (not shown in Fig. 4), a propeller (not shown in Fig. 4), and a power management module (e.g., power management module 60 in Fig. 4). In the power device standard member shown in Fig. 4, the power device standard member is powered by a 12V power supply battery, GND represents the ground terminal of the wire, and ACC represents the input terminal of the wire.

In referring to Fig. 1, in some embodiments, the control unit 30 and the power control device 40 may be connected by one communication bus, and the control units 30 may be connected with each other by another communication bus. In this way, the problems of too high bus load rate and bus ID conflict caused by using a single bus can be solved. For example, taking the power device standard member shown in Fig. 4 as an example, the RTU 30' and the power control device (not shown in Fig. 4), as well as the RTU 30' and the MCU 20', may be connected based on the communication bus CAN1; The RTU 30' may be connected to other RTUs (i.e., RTUs 30' of other power device standard members) based on the communication bus CAN2.

In some embodiments, the power device or the standard member of the power device can be arranged near the stern of the marine vessel to facilitate operations of driving the marine vessel, and the power control device can be arranged in the cab of the marine to facilitate operation of the vessel by the user.

In embodiments of the present disclosure, the cooperative working mode means that two or more power devices participate in the driving of the marine vessel simultaneously, and the relationship among the power devices participating in the driving of the marine is cooperative. The independent working mode means that only one power device participates in the driving of the marine vessel at a time, so the independent working mode can also be called a single machine working mode. Since the cooperative working mode and the independent working mode are different working modes (or called control modes), when the marine multi-power-source control system is powered on, it needs to determine which working mode the plurality of power devices of the marine belong to.

In some embodiments, each control unit of the marine multi-power-source control system can broadcast an identification code to other control units when the system is powered on, and determine whether the identification code broadcasted by another control unit is received or not. When the identification code broadcasted by another control unit is received, the control unit can confirm that it is in a cooperative working mode; otherwise, the control unit determines that it is in an independent working mode. When a control unit is in the cooperative working mode, it indicates that the power device corresponding to the control unit is in the cooperative working mode; similarly, when a control unit is in the independent working mode, it indicates that the power device corresponding to the control unit is in the independent working mode. Therefore, the identification of the working mode of the power device is realized through the identification codes of the control units. The identification code of a control unit is used to uniquely identify the control unit. In one exemplary embodiment, the identification code may be a controller area network (CAN) identification code or the like.

The other control units mentioned above are the other control units in the plurality of control units. For example, taking the marine multi-power-source control system shown in Fig. 2 as an example, the left control unit 30a can broadcast its own identification code to the right control unit 30b, and the right control unit 30b can also broadcast its own identification code to the left control unit 30a. When the left control unit 30a receives the identification code broadcasted by the right control unit 30b, the left control unit 30a may confirm that it is in the cooperative working mode, otherwise, the left control unit 30a may confirm that it is in the independent working mode. When the right control unit 30b receives the identification code broadcasted by the left control unit 30a, the right control unit 30b may also confirm that it is in the cooperative working mode, otherwise, the right control unit 30b may also confirm that it is in the independent working mode. Generally, when there is a connection between the left control unit 30a and the right control unit 30b, both the left control unit 30a and the right control unit 30b can receive the identification code broadcasted by the other party, so that each of them can confirm that it is in the cooperative working mode. When there is no connection between the left control unit 30a and the right control unit 30b, both the left control unit 30a and the right control unit 30b will not receive the identification code broadcasted by the other party, so that each of them determines that it is in the independent working mode.

When it is confirmed that multiple power devices are in the cooperative working mode, since multiple control units are involved in the control, one of them needs to be selected as the master (the control unit operates in a master mode), while the other control units can operate as the slaves (the slaves operate in a slave mode).

In some embodiments, each control unit may also set itself to the slave mode when confirming that it is in the cooperative working mode, and determine whether it receives a message requesting it to switch to become the master. When receiving the message of switching to become the master, the control unit switches itself to the master mode, otherwise, the slave mode is maintained, so that the master and the slaves can be conveniently configured, and the condition that a plurality of masters exist at the same time can be effectively avoided.

When the power control device is connected with one of the control units of the marine vessel, the connected control unit may receive a message requesting it to switch to the master. The connected control unit then switches itself to the master mode, while the other control units which are not connected cannot receive the message of switching to the master, and thus each of them will maintain its own slave mode. The master and slave setting mode is simple and easy to implement.

In some embodiments, the message of switching to the master may be a message that the power control device, after being connected to a control unit, actively sends to the control unit for requesting that the control units switch to the master. In another embodiment, the message of switching to the master may also be a message that the control unit, upon discovering that there is a power control device connected thereto, regards the discovery of such a connection as the receipt of the message indicating to one's own control unit to switch to the master.

In some other embodiments, when each control unit confirms that it is in the cooperative working mode, each control unit may further determine whether its own identification code is a target identification code. When its own identification code is the target identification code, the control unit switches itself to the master mode, otherwise, the control unit maintains its own slave mode. The target identification code may be the minimum or the maximum of the plurality of identification codes, or any other appropriate condition. Since the master and slave setting mode is no longer limited to setting the control unit connected with the power control device as the master, but can set the control unit corresponding to the minimum, the maximum or any other appropriate condition in a plurality of identification codes as the master, the user's maneuverable space is wider, and the autonomous select-ability is stronger.

The master and the slaves are set by determining whether their own identification code is the target identification code. It is required that the identification code of each control unit be different, so as to avoid the problem that the power control signal is sent by mistake or the display unit (if any) of the system does not display the information correctly. Since the identification code of each control unit is randomly generated during initialization, and the value range of the randomly generated identification code is wide (e.g., 0 to 4294967295), it is generally unlikely that two or more control units have the same identification code. That is, the probability that two or more control units having the same identification code is very low. Since each control unit has exchanged identification codes with each other before, and in the cooperation mode, it means that each control unit has collected its own identification code and the identification codes of other control units. Therefore, before determining whether its own identification code is the target identification code, it is possible to designate any one of the control units to determine whether or not the same identification code exists in the system. When the same identification code exists, an identification code update is performed so that the identification code of each control unit is different. The determination of whether the same identification code exists in the system refers to determining whether each control unit of the marine multi-power-source control system has the same identification code as another control unit.

In some embodiments, performing an identification code update as described above may occur on control units only where the same identification code exists. For example, in an exemplary scenario, the system has four control units: control unit A, control unit B, control unit C, and control unit D. If both the control unit A and the control unit B have an identification code of 1025, the control unit A and/or the control unit B may regenerate the identification codes respectively, while the other control units do not participate in the identification code update. In other embodiments, the execution of the identification code update may also occur on all control units, and the execution may be selected as required. For example, taking the four control units described above as an example, if the identification code of the control unit A and the control unit B are both 1025, it is possible for the control unit A, the control unit B, the control unit C, and the control unit D to regenerate the identification code respectively.

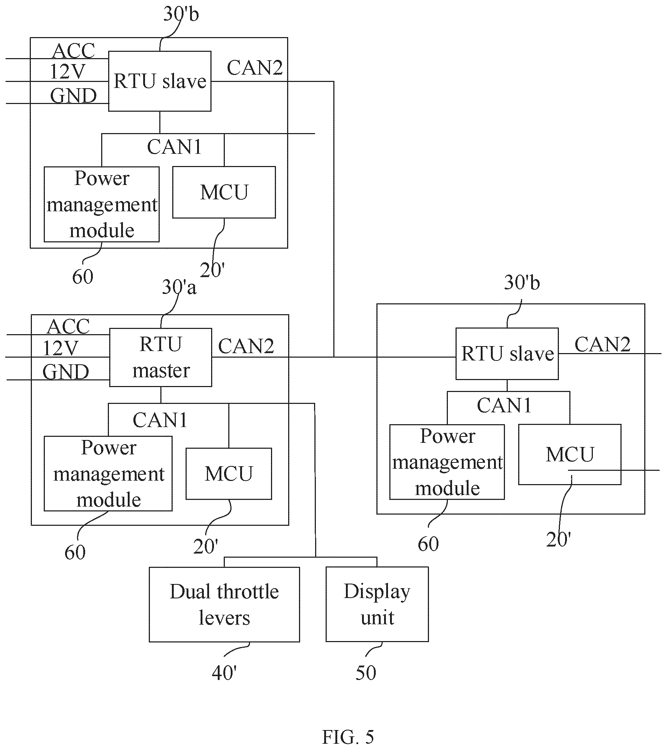

In referring to Fig. 5, in some embodiments, the marine multi-power-source control system may further comprise a display unit 50, which may be connected to the RTU master 30'a (i.e., the control unit as the master). The RTU master 30'a can send the data information of the RTU master 30'a and each RTU slave 30'b (i.e., the control unit serving as the slaves) to the display unit 50 for display in real time, so as to facilitate observation by the user. For the RTU master 30'a, when confirming that it has switched to the master mode, it can send its own data information to the display unit 50 for display in real time, and when receiving the data information sent by any RTU slave 30'b in real time, it can forward the data information to the display unit 50 for display in real time. For each RTU slave 30'b, when confirming to maintain its own slave mode, it may transmit its own data information to the RTU master 30'a in real time, and the RTU master 30'a transfers the data information to the display unit 50 for display.

The data information described above may be any data information related to the system that the user desires to output and display (e.g., real-time power, driving direction, identification code, master-slave mode, working mode (e.g., cooperative work, independent work), etc.). In some embodiments, the display unit 50 may be a display screen having only an information output function, or a human-machine interface (HMI) having both an information output function and an information input function.

In other embodiments, each power device standard member may be configured with a separate display unit, so as to locally display the power device standard member and its related data information (e.g., real-time power, driving direction, identification code, master-slave mode, working mode (e.g., cooperative work, independent work), etc.)) in real time.

It should be noted that in some embodiments, in the master-slave mode, the power control signal for the slaves may be forwarded by the master to the corresponding slave. After receiving the power control signal, the master determines whether the power control signal is a power control signal for the master. The power control signal may carry an identification of the power management component, and the master or the slaves corresponding to the power management component can be determined. Therefore, in some embodiments, the master may identify whether the power control signal is a power control signal for the master or a power control signal for the slaves according to the identification of the power management component carried in the power control signal.

If the power control signal is a power control signal for the master, the master analyzes the power control signal and sends the analyzed power control signal to the power controller corresponding to the master, so that the power controller controls the operation of the corresponding power device according to the power control signal. If the power control signal is not a power control signal for the master, the power control signal must be a power control signal for the slaves, so the master can forward the power control signal to the corresponding slave, the corresponding slave parses the power control signal, and sends the parsed power control signal to the corresponding power controller, so that the power controller controls the operation of the corresponding power device according to the power control signal.

In some embodiments, the cooperative control mode described above may comprise, but is not limited to, any of the following:
(1) The master is controlled by one power management component, and all slaves are controlled by another power management component. For example, in the embodiment shown in Fig. 5, the system comprises three power device standard members, wherein one RTU of the power device standard members serves as the RTU master 30'a, which is connected to the dual throttle levers 40' and the display unit 50 through the communication bus CAN1, and the RTU master 30'a is connected to the RTUs of the other two power device standard members (i.e., the RTU slave 30'b) through the communication bus CAN2. Thus, one throttle lever of the dual throttle levers 40' can be used to control the power device corresponding to the RTU master 30'a, and another throttle lever of the dual throttle levers 40' can be used to synchronously control the power devices corresponding to the two RTU slaves 30'b.
   In this control mode, the master and the slaves can operate with the same or different power at the same time (i.e., the power device corresponding to the master and the power device corresponding to the slaves can output the same or different power at the same time), and the slaves can operate with the same power at the same time (i.e., the power device corresponding to the slaves can output the same power at the same time).
(2) The master is controlled by one power management component, and some of the slaves are controlled by another power management component. According to the power demand, when only a portion of the power devices are required to participate in the marine vessel driving, the cooperation mode in which the master is controlled by one power management component and some of the slaves are controlled by another power management component can be selected. For example, in one exemplary scenario, the system has six power devices. When the power demand is not high, only four of the power devices can be used to drive the marine to save electric energy. In this scenario, one control unit corresponding to the four power devices can be used as the master, and the control units corresponding to the remaining three power devices can be used as three slaves. The master can be controlled by one throttle lever of the dual throttle levers, and another throttle lever of the dual throttle levers can simultaneously control the three slaves.
   In this control mode, the master and slaves can operate at the same time with the same or different power, and each slaves can operate at the same time with the same power.
(3) All control units are controlled by one power management component. In this control mode, the master and the slaves operate at the same time with the same power.
(4) All control units are divided into several groups, and each group is controlled by a power management component, where the number of the control units in each group may be the same. In this control mode, all control units in the same group operate at the same time with the same power; control units in different groups can operate at the same time with the same or different power.

In some embodiments, as may be required, on the basis of configuring a first power control device having a plurality of power management components, a second power control device having a single power management component can be respectively configured for part or all of the power device standard members (e.g., when all the power device standard members are respectively provided with a second power control device with a single power management component, the second power control devices are in one-to-one correspondence with the power device standard members). Therefore, when the first power control device fails, the driving of the marine vessel can be controlled through the second power control devices, and the reliability of the system is improved. Further, the control priority of the second power control device may be higher than the control priority of the first power control device. When the user operates the first power control device and the second power control device at the same time, the system may respond only to the power control signal output from the second power control device while ignoring the power control signal output from the first power control device. In this way, the need for independent control in special situations, such as emergencies, can be satisfied.

It should be noted that the plurality of power management components of the first power control device may be operated simultaneously or individually. When a plurality of power management components of the first power control device are operated at the same time, the first power control device may output a plurality of throttle signals at the same time, thereby realizing multi-power-source remote operation control (i.e., multi-remote control). The first power control device may output a throttle signal at a time when one of its power management components is operated, thereby realizing single power remote operation control (i.e., single remote control). However, since the second power control device has only one power management component, it can output only one kind of throttle signal at a time, so it can only implement single remote control.

For example, taking the first power control device (i.e., the dual throttle levers 40') having two power operating management components (i.e., the left throttle lever 40a and the right throttle lever 40b) shown in Fig. 3 as an example, when the left throttle lever 40a and the right throttle lever 40b are operated simultaneously, two kinds of throttle signals (i.e., the left throttle signal and the right throttle signal) are output, thereby realizing dual remote control. The left throttle signal may be output when the left throttle lever 40a is operated alone, or the right throttle signal may be output when the right throttle lever 40b is operated alone, thereby achieving single remote control.

For the convenience of description, the above marine multi-power-source control system is described in terms of functions divided into various units described separately. Of course, the functions of the various units may be implemented in one or more software module and/or hardware components in the practice of this disclosure.

The embodiment of the specification also provides a marine vessel which is provided with a plurality of power devices and can be configured with the marine multi-power-source control system described above, so that the multi-power-source control cost is reduced, and the marine vessel has the characteristics of flexible operation, strong scalability and the like.

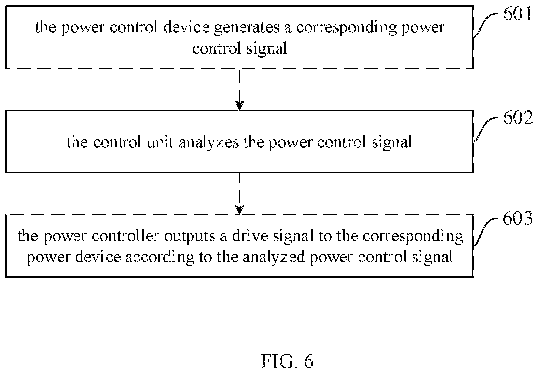

The embodiments of the present disclosure further provide a marine multi-power-source control method, which can be applied to the marine multi-power-source control system (specifically, the control unit of the marine multi-power-source control system can be used as the execution subject). As shown in Fig. 6, in some embodiments, the marine multi-power-source control method can comprise the following steps.

In step 601, the power control device generates a corresponding power control signal (e.g., generating a corresponding power control signal based on a user operation).

The power control device may generate a corresponding power control signal when a user operates a power management component of the power control device. For example, taking the dual throttle levers 40 ' shown in Fig. 3 as an example, when the user pushes the left throttle lever 40a forward, the left throttle lever 40a will generate a corresponding power control signal in response to the user's operation.

In step 602, the control unit analyzes the power control signal.

Different power management components of the power control device control different power devices, and the power control signals generated by the different power management components are sent to different control units for analysis. In the cooperative working mode, the power control signal for the master can be parsed by the master, and the power control signal for the slaves or the slaves can be forwarded by the master to the corresponding slave and parsed by the slave. In this way, not only the burden of the master can be reduced, but also the resource utilization rate of the slaves can be improved.

In step 603, the power controller outputs a drive signal to the corresponding power device according to the analyzed power control signal.

According to the multi-power-source control method based on some embodiments of this disclosure, since the power control device only needs to be connected with one control unit, instead of requiring the power control device to be respectively connected with each control unit as in the related art, thereby simplifying the wiring connection, reducing the connection interfaces, and reducing the multi-power-source control cost of the vehicle. In addition, the connection among the plurality of control units in the embodiments of the present disclosure can be configured, and the user can control the independent operation of a single power device or the cooperative operation of a plurality of power devices simply by controlling one or more power management components of the same power control device. When the power management components are bidirectional management components, it can also realize the control of different directions of a single power device or a plurality of power devices, which is convenient for the user to control the power devices according to demand, and allow flexible operation and strong scalability.

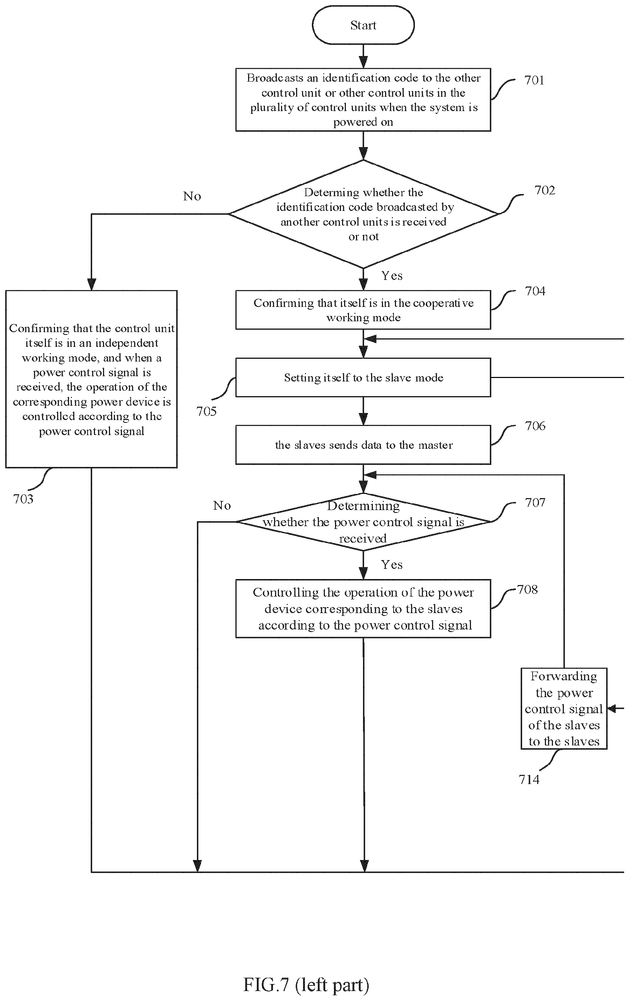

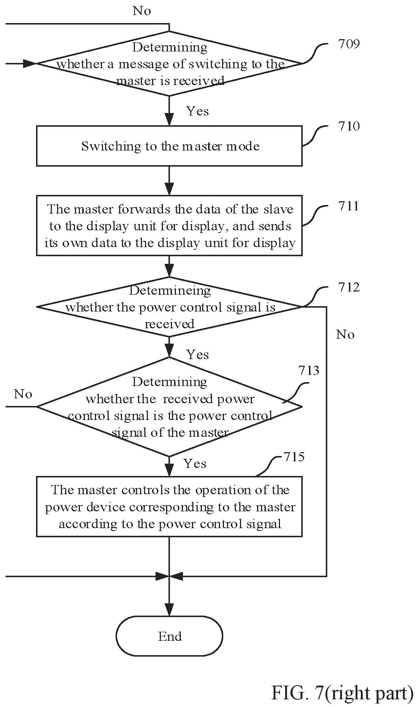

Embodiments of the present disclosure further provide another marine multi-power-source control method, which can be applied to the marine multi-power-source control system side (specifically, the control unit of the marine multi-power-source control system can be used as the execution subject of the method). As shown in Fig. 7, in some embodiments, the marine multi-power-source control method may comprise the following steps.

In step 701, a control unit broadcasts an identification code to the other control unit or other control units in the plurality of control units when the system is powered on. Broadcasting the identification code to the other control unit(s) of the plurality of control units may be used to identify the operating mode.

In step 702, the control unit determines whether the identification code broadcasted by another control units is received or not. If the identification code broadcasted by another control unit is received, step 704 is executed, otherwise, step 703 is executed.

In step 703, the control unit confirms that the control unit itself is in an independent working mode, and when a power control signal is received, the operation of the corresponding power device is controlled according to the power control signal.

In step 704, the control unit confirms that itself is in the cooperative working mode.

In some embodiments, the cooperative working mode comprises any one of the following:
(1) The master is controlled by one power management unit, and all slaves are controlled by another power management unit;
(2) The master is controlled by one power management component, and a portion of the slaves are controlled by another power management component;
(3) All control units are controlled by one power management unit;
(4) All control units are divided into several groups, and each group is controlled by a power management component.

In step 705, the control unit sets itself to the slave mode.

In step 706, the control unit that is in the slave mode (the slaves) sends data to the master.

Since the slaves are not connected to the display unit and needs to transmit data with the help of the master, the slaves can send data information to the master in real time.

In step 707, the slave machine determining whether the power control signal is received, If the power control signal is received, step 708 is executed, otherwise, the process ends.

In step 708, the slaves control the operation of the power device corresponding to the slaves according to the power control signal.

The slaves analyzes the power control signal and sends the analyzed power control signal to the corresponding power controller, so that the power controller can control the corresponding power device to output the corresponding power accordingly.

In step 709, the control unit determines whether a message of switching to the master is received. If the message of switching to the master is received, step 710 is executed; otherwise, go to execute step 705 (i.e., maintaining the slave mode).

In step 710, the control unit switches to the master mode.

The master and slave setting mode is simple and easy to implement.

In step 711, the master forwards the data of the slaves to the display unit for display, and sends its own data to the display unit for display.

The master can forward the data of the slaves to the display unit for display in real time, and send its own data to the display unit for display in real time.

In step 712, the master determines whether the power control signal is received. If the power control signal is received, go to execute step 713, otherwise, the process ends.

In step 713, the master determines whether the received power control signal is the power control signal of the master. If the received power control signal is not the power control signal of the master, go to execute step 714, otherwise, go to execute step 715.

In step 714, the master forwards the power control signal of the slaves to the slaves.

Since the slaves are not connected to the power control device and the power control signal needs to be forwarded by means of the master, the master can forward the power control signal of the slaves to the slaves.

In step 715, the master controls the operation of the power device corresponding to the master according to the power control signal.

The master analyzes the power control signal and sends the analyzed power control signal to the corresponding power controller, so that the power controller can control the corresponding power device to output the corresponding power accordingly.

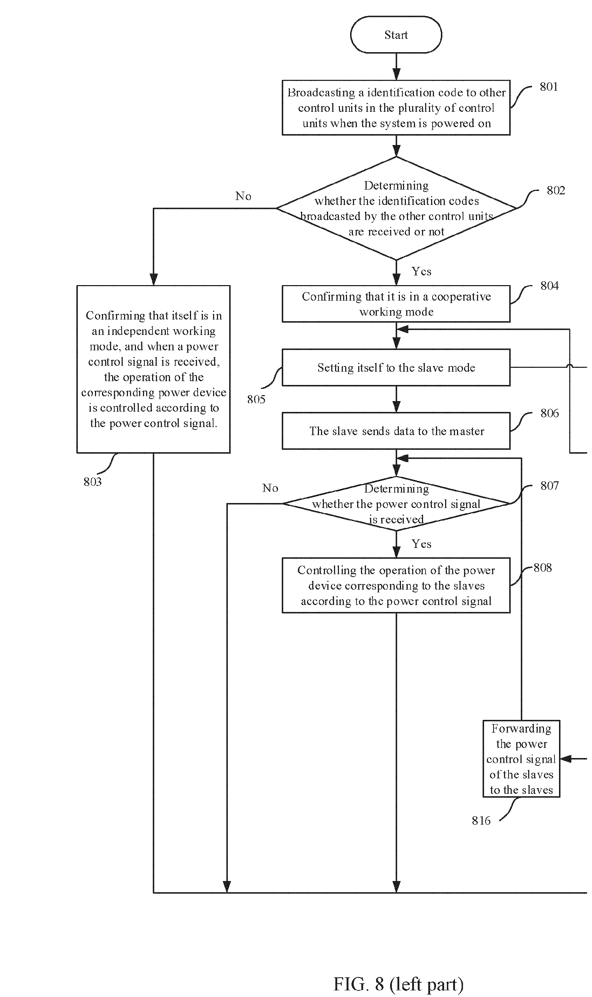

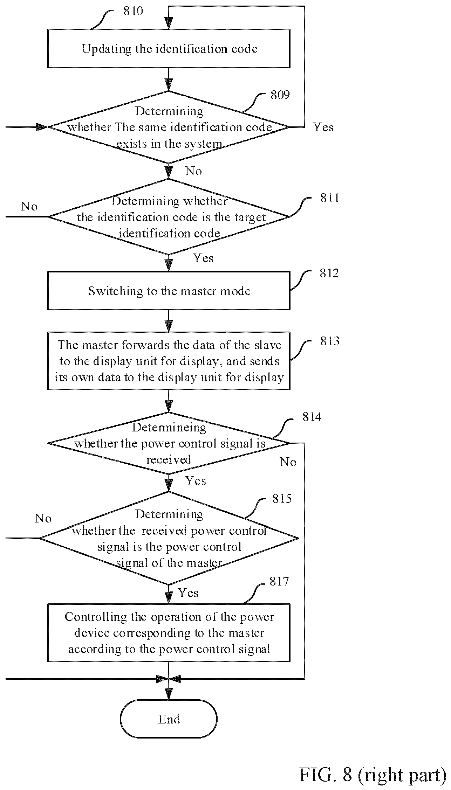

The embodiments of the present disclosure further provide another marine multi-power-source control method, which can be applied to the marine multi-power-source control system side (specifically, the control unit of the marine multi-power-source control system can be used as the execution subject of the method). As shown in Fig. 8, in some embodiments, the marine multi-power-source control method can comprise the following steps.

In step 801, when the system is powered on, the control unit broadcasts an identification code to other control units in the plurality of control units to identify the working mode.

In step 802, the control unit determines whether the identification codes broadcasted by the other control units are received. If the identification codes broadcasted by the other control units are received, step 804 is executed, otherwise, step 803 is executed.

In step 803, the control unit determines that itself is in an independent working mode, and when a power control signal is received, the operation of the corresponding power device is controlled according to the power control signal.

In step 804, the control unit confirms itself is in the cooperative working mode.

In step 805, the control unit sets itself to the slave mode.

In step 806, the slaves sends data to the master.

Since the slaves are not connected to the display unit and needs to transmit data with the help of the master, the slaves can send data information to the master in real time.

In step 807, the slaves determines whether a power control signal is received. If the power control signal is received, the step 808 is executed, otherwise, the process ends.

In step 808, the slaves controls the operation of the power device corresponding to the slaves according to the power control signal.

In step 809, the control unit determines whether the same identification code exists in the system. If yes, step 810 is executed, otherwise, step 811 is executed.

In step 809, since the control units have exchanged the identification codes with each other before, and in the cooperation mode, it means that each control unit has collected its own identification code and the identification codes of the other control units. Therefor, any control unit can be designated to determine whether the system has the same identification code.

In step 810, the control unit updates the identification code, and skips to execute step 809.

By checking whether the system has the same identification code, the problem that the power control signal is incorrectly sent or the display unit (if any) of the system cannot display the information correctly can be avoided.

In some embodiments, the execution of the identification code update may only occur on the control unit having the same identification code, or may occur on all control units, which may be selected as preferred.

In step 811, the control unit determines whether the identification code is the target identification code, and if the identification code is the target identification code, go to execute step 812, otherwise go to execute step 805.

The target identification code may be the minimum, the maximum, or any other suitable condition of the plurality of identification codes.

In step 812, the control unit switches to the master mode.

Since the master-slave setting mode is no longer limited to taking the control unit connected with the power control device as the master, but can take the control unit corresponding to the minimum identification code, the maximum identification code or any other appropriate condition in a plurality of identification codes as the master, the maneuverable space of the user is wide, and the autonomous select-ability is stronger.

In step 813, the master forwards the data of the slaves to the display unit for display, and sends its own data to the display unit for display.

In step 814, the master determines whether a power control signal is received. If the power control signal is received, step 815 is executed, otherwise, the process ends.

In step 815, the master determines whether it is a power control signal of the master. If it is not the power control signal of the master, step 816 is executed, otherwise, step 817 is executed.

In step 816, the master forwards the power control signal of the slaves to the slaves.

In step 817, the master controls the operation of the power device corresponding to the master according to the power control signal.

In other embodiments, on the basis of configuring a first power control device having a plurality of power management components, a second power control device having a single power management component can be respectively configured for a part or all of the power device standard members (e.g., when all the power device standard members are respectively provided with a second power control device with a single power management component, the second power control devices are in one-to-one correspondence with the power device standard members). In this scenario, the vehicle multi-power-source control method may further comprise the following.

When the first power control device fails, controlling a corresponding power device according to the power control signal output by the second power control device; or, when the power control signals respectively output by the first power control device and the second power control device for the same power device are simultaneously received, only the power control signal output by the second power control device is responded to (i.e., the control priority of the second power control device is greater than that of the first power control device).

Although the process flows described above comprise a plurality of operations that occur in a particular order, it should be clear that the processes may comprise more or fewer operations, and the processes may be executed sequentially or in parallel (e.g., using parallel processors or a multi-threaded environment).

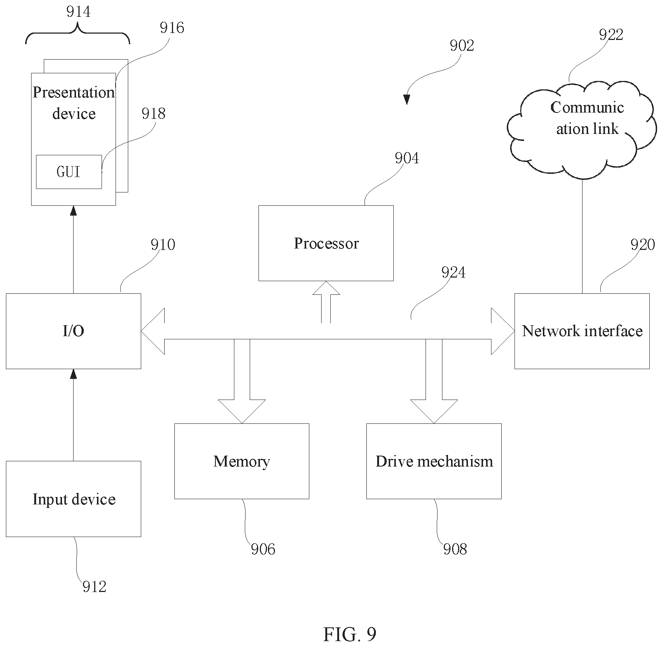

The embodiments of the present disclosure also provide a computer device, which can be configured in the marine vessel of the above embodiments. As shown in Fig. 9, in some embodiments of that present disclosure, the computer device 902 may comprise one or more processors 904, such as one or more central processing units (CPUs) or graphic processing units (GPUs), each of which may implement one or more hardware threads. The computer device 902 may also include a memory 906 of any type for storing any kind of information, such as code, settings, data, etc. In one particular embodiment, the memory 906 stores a computer program which is executable on processor 904, and when the computer program executed by the processor 904, the instructions of the marine multi-power-source control method according to any of the above embodiments may be executed. Non-limitingly, for example, the memory 906 may comprise any one or a combination of the following: any type of RAM, any type of ROM, flash memory devices, hard disks, optical disks, etc. More generally, any memory can store information using any technology. Further, any memory may provide volatile or non-volatile retention of information. Further, any memory may represent fixed or removable components of the computer device 902. In one case, the computer device 902 may perform any of the operations of the associated instructions when the processor 904 executes the associated instructions stored in any memory or combination of memories. The computer device 902 also comprises one or more drive mechanisms 908 for interacting with any storage, such as a hard disk drive mechanism, an optical drive mechanism, or the like.

The computer device 902 may also comprise an input/output interface 910 (I/O) for receiving various inputs (via input device 912) and for providing various outputs (via output device 914). One particular output mechanism may comprise a presentation device 916 and an associated graphical user interface 918 (GUI). In other embodiments, the particular output mechanism may not comprise the input/output interface 910 (I/O), the input device 912, and the output device 914, and just as a watercraft in the network. The computer device 902 may also comprise one or more network interfaces 920 for exchanging data with other devices via one or more communication links 922. One or more communication buses 924 connect the components described above together.

Communication link 922 may be implemented in any manner, such as via a local area network, a wide area network (e.g., Internet), a point-to-point connection or the like, or any combination thereof. The communication link 922 may comprise any combination of hardwired links, wireless links, routers, gateway functions, name servers, and the like governed by any protocol or combination of protocols.

The above disclosure is described with reference to flowchart illustration and/or block diagrams of methods, apparatus (systems), and compute program products of some embodiments of that present description. It will be understood that each flow and/or block of the flowchart illustrations and/or block diagrams, and combinations of flows and/or blocks in the flowchart illustrations and/or block diagrams, can be implemented by computer program instructions. These computer program instructions may be provided to a processor of a general-purpose computer, special-purpose computer, embedded processor, or other programmable data processor to produce a machine, such that the instructions, which execute via the processor of the computer or other programmable data processor, create means for implementing the functions specified in the flowchart flow or flows and/or block diagram block or blocks.

These computer program instructions may also be stored in a computer-readable memory that can direct a computer or other programmable data processor to function in a particular manner, such that the instructions stored in the computer-readable memory produce an article of manufacture including instruction means, The computer program instructions implement the functions specified in the flow diagram flow or flows and/or block diagram block or blocks.

The computer program instructions may also be loaded onto a computer or other programmable data processor to cause a series of operational steps to be performed on the computer or other programmable apparatus to produce a computer implemented process. Such that the instructions which execute on the computer or other programmable apparatus provide steps for implementing the functions specified in the flowchart flow or flows and/or block diagram block or blocks.

In a typical configuration, the marine vessel comprises one or more processors (CPUs), input/output interfaces, network interfaces, and memory.

Memory may include volatile storage in a computer-readable medium, random access memory (RAM), and/or other forms of non-volatile memory such as read-only memory (ROM) or flash RAM. Memory is an example of a computer-readable medium.

Computer readable media, including both permanent and non-permanent, removable and non-removable media, may be implemented in any method or technology for information storage. Information may be computer readable instructions, data structures, modules of programs, or other data. Examples of storage media for a computer comprises, but is not limited to, phase-change memory (PRAM), static random access memory (SRAM), dynamic random access memory (DRAM), other types of random access memory (RAM), read only memory (ROM), electrically erasable programmable read only memory (EEPROM), flash memory or other memory technologies, compact disk-read only memory (CD-ROM), digital versatile disks (DVD) or other optical storage, magnetic cassettes, magnetic disk storage or other magnetic storage devices or any other non-transmission medium that can be used to store information that can be accessed by the marine. As defined in this specification, computer readable media does not comprise transitory media, such as modulated data signals and carrier waves.

As will be appreciated by ordinary skilled technicians in this field, embodiments of the present disclosure may be provided as a method, system, or computer program product. Accordingly, the embodiments herein may take that form of an entirely hardware embodiment, an entirely software embodiment or embodiments combining software and hardware aspects. Furthermore, embodiments of the present disclosure may take the form of a computer program product embodied in one or more computer-usable storage media having computer-usable program code embodied in the media, including but not limited to magnetic disk storage, CD-ROM, optical storage, etc.

Embodiments of the disclosure may be described in the general context of computer-executable instruction, such as program modules, being executed by a computer. Generally, program modules include routines, programs, objects, components, data structures, etc, that perform particular tasks or implement particular abstract data types. Embodiments of the present disclosure may also be practiced in distribute computing environments where tasks are executed by remote processors that are linked through a communications network. In the distributed computing environment, the program modules may be located in both local and remote computer storage media including memory storage devices.

It should also be understood that in the embodiments of the present disclosure, the term "and/or" is merely an association relationship describing an associated object, indicating that three relationships may exist. For example, A and/or B can represent three cases: A alone, A and B together, and B alone. In addition, the character "/" in this document generally indicates that the associated object is an "or" relationship.

Each embodiment in this disclosure is described in a progressive manner, and the same and similar parts of each embodiment can be referred to each other, and each embodiment focuses on the differences from other embodiments. In particular, for the embodiments of the system, since it is basically similar to the embodiments of the method, the description is relatively simple, and the relevant part can be referred to the description of the embodiments of the method.

In the description of this disclosure, reference to a description of "one embodiment", "some embodiments", "an example", "a specific example", or "some examples", etc., means that a particular feature, structure, material, or characteristic described in connection with the embodiment or example is included in at least one embodiment or example of an embodiment of this disclosure. In the present specification, schematic expressions of the above terms are not necessarily directed to the same embodiment or example. Moreover, the particular features, structures, materials, or characteristics described may be combined in any suitable manner in any one or more embodiments or examples. Furthermore, different embodiments or examples and features of different embodiments or examples described in this specification may be combined and incorporated by those skilled in the art without being mutually contradictory.

The above description is only an example of the present disclosure and is not intended to limit the present disclosure. It will be apparent to ordinary skilled technicians in this field that various modifications and variations are possible in the present application. Any modifications, equivalents, improvements, and the like that are within the spirit and principles of the present disclosure are intended to be included within the scope of the claims of the present disclosure.

## Claims

1. A vehicle multi-power-source control system, comprising:
a first power control device configured with one or more power management components, each for generating a corresponding power control signal;
a plurality of control units, one of the plurality of control units being connected to the first power control device, a connection among the plurality of control units being configurable to enable a plurality of power devices to work cooperatively or independently, and each of the plurality of control units being configured to analyze a corresponding power control signal;
a plurality of power controllers correspondingly connected with the plurality of control units and configured to output drive signals to the corresponding power devices according to the power control signals analyzed by the corresponding control units.

2. The vehicle multi-power-source control system of claim 1, wherein each control unit is further configured to:
broadcast an identification code to the plurality of control units when the system is powered on, and determine whether an identification code broadcasted by any other control unit is received or not;
confirm that the control unit is in a cooperative working mode when receiving the identification code broadcasted by any other control unit, otherwise, confirm that the control unit is in an independent working mode.

3. The vehicle multi-power-source control system of claim 2, wherein each control unit is further configured to:
set itself to a slave mode when confirming that it is in the cooperative working mode, and determine whether a message of switching to a master mode has been received;
switch itself to the master mode when the message of switching to the master mode is received, otherwise, remain in the slave mode.

4. The vehicle multi-power-source control system of claim 2, wherein each control unit is further configured to:
set itself to a slave mode when confirming that it is in the cooperative working mode, and determine whether its own identification code is a target identification code; and
switch itself to a master mode when its own identification code is the target identification code, otherwise remain in the slave mode.

5. The vehicle multi-power-source control system of claim 4, wherein the target identification code is a minimum or a maximum of a plurality of identification codes.

6. The vehicle multi-power-source control system of claim 1, wherein the vehicle multi-power-source control system further comprises:
one or more second power control devices, each configured with a single power management component, wherein the second power control devices are in a one-to-one correspondence with the power devices; the second power control devices are configured to generate power control signals corresponding to the power devices; and a control priority of the second power control devices is higher than a control priority of the first power control device.

7. The vehicle multi-power-source control system of claim 4, wherein each control unit is further configured to:
confirm whether a same identification code exists in the system before determining whether its own identification code is the target identification code; and
when the same identification code exists, perform an identification code update so that the identification code of each control unit is different.

8. The vehicle multi-power-source control system of claim 3 or 4, wherein the cooperative working mode comprises any one of the following:
the master is controlled by a power management component, and all slaves are controlled by another power management component;
the master is controlled by a power management component, and some of the slaves are controlled by another power management component;
the plurality of control units are controlled by a same power management component; or
the plurality of control units are divided into several groups, and each group is controlled by a power management component.

9. The vehicle multi-power-source control system of claim 3 or 4, wherein the vehicle multi-power-source control system further comprises a display unit; and
the control unit that switches to the master mode is configured to:
send data information of the master and the slaves to the display unit for display in real time.

10. The vehicle multi-power-source control system of claim 1, wherein one of the plurality of control units is connected with the first power control device through a first communication bus, and the plurality of control units are connected with each other through a second communication bus.

11. A vehicle multi-power-source control method, applied to a vehicle multi-power-source control system according to claim 1; the method comprises:
generating, by the first power control device, a corresponding power control signal;
analyzing, by the control unit, the power control signal;
outputting, by the power controller, a drive signal to a corresponding power device according to the analyzed power control signal.

12. The vehicle multi-power-source control method of claim 11, wherein the method further comprises:
broadcasting, by the control unit, an identification code to the plurality of control units when the vehicle multi-power-source control system is powered on, and determining whether an identification code broadcasted by another control unit is received or not;
confirming that the control unit is in a cooperative working mode when the control unit receives an identification code broadcasted by any other control unit, or confirming that the control unit is in an independent working mode.

13. The vehicle multi-power-source control method of claim 12, after the control unit confirms that it is in the cooperative working mode, the method further comprises:
setting, by the control unit, itself to a slave mode and determining whether a message of switching to a master mode has been received;
switching, by the control unit, to the master mode when the message of switching to the master mode is received, otherwise remaining in the slave mode.

14. The vehicle multi-power-source control method of claim 12, after the control unit confirms that it is in the cooperative working mode, the method further comprises:
setting, by the control unit, itself to a slave mode and determining whether its own identification code is a target identification code;
switching the control unit to a master mode when its own identification code is the target identification code, otherwise remaining in the slave mode.

15. The vehicle multi-power-source control method of claim 14, the target identification code is a minimum or a maximum of a plurality of identification codes.

16. The vehicle multi-power-source control method of claim 11, wherein the vehicle multi-power-source control system further comprises one or more second power control devices, each configured with a single power management component; wherein the second power control devices are in one-to-one correspondence with the plurality of power devices; and wherein correspondingly, the vehicle multi-power-source control method further comprises:
when the first power control device fails, controlling the corresponding power device according to the power control signal outputted by the second power control device; or
when the power control signal respectively outputted by the first power control device and the second power control device for the same power device are simultaneously received, responding to only the power control signal outputted by the second power control device.

17. The vehicle multi-power-source control method of claim 14, before the control unit determines whether its own identification code is the target identification code, the method further comprises:
confirming, by the control unit, whether the same identification code exists in the system; and
when the same identification code exists, updating, by the control unit, identification code so that the identification code of each control unit is different.

18. The vehicle multi-power-source control method of 13 or 14, the cooperative working mode comprises any one of the following:
the master is controlled by one power management component, and all slaves are controlled by another power management component;
the master is controlled by a power management component, and some of the slaves are controlled by another power management component;
all control units are controlled by one power management component; or
all control units are divided into several groups, and each group is controlled by a power management component.

19. The vehicle multi-power-source control method of 13 or 14, the vehicle multi-power-source control system further comprises a display unit;
the control unit that switches itself to the master mode is also configured to:
send the data information of the master and the slaves to the display unit for display in real time.

20. The vehicle multi-power-source control method of claim 11, one of the plurality of control units is connected with the first power control device through a first communication bus, and the plurality of control units are connected with each other through a second communication bus.

21. A vehicle, comprising a vehicle multi-power-source control system according to any one of claims 1-10.

22. A computer storage medium having a computer program stored thereon, the computer program, when executed by a processor of a vehicle, implements a vehicle multi-power-source control method according to any one of claims 11-20.
